(19) Europäisches Patentamt
European Patent Office
Office européen des brevets

(11) **EP 3 115 269 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(51) Int Cl.:
***B60T 17/22*** *(2006.01)*

(21) Anmeldenummer: **16173715.0**

(22) Anmeldetag: **09.06.2016**

(54) **VERFAHREN ZUR KONTROLLE DER SCHIEBEBEWEGLICHKEIT EINES BREMSSATTELS**

METHOD FOR CONTROLLING THE SLIDING MOBILITY OF A BRAKE CALIPER

PROCEDE DE CONTROLE DU MOUVEMENT COULISSANT D'UN DISQUE DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2015 DE 102015110149**

(43) Veröffentlichungstag der Anmeldung:
**11.01.2017 Patentblatt 2017/02**

(73) Patentinhaber: **BPW Bergische Achsen KG
51674 Wiehl (DE)**

(72) Erfinder:
• **Manz, Stefan
51674 Wiehl (DE)**
• **Schneider, Peter
51597 Morsbach (DE)**

(74) Vertreter: **Bungartz Christophersen
Partnerschaft mbB Patentanwälte
Homberger Strasse 5
40474 Düsseldorf (DE)**

(56) Entgegenhaltungen:
EP-A1- 2 479 450     EP-A2- 1 176 330
DE-A1- 3 707 821     DE-A1- 4 240 599

EP 3 115 269 B1

**Beschreibung**

Die Erfindung betrifft ein Verfahren zur Kontrolle der Schiebebeweglichkeit eines eine Bremsscheibe sowie Bremsbeläge beidseits der Bremsscheibe übergreifenden Bremssattels einer Schiebesattel-Scheibenbremse nach dem Oberbegriff der Patentansprüche 1 und 2. Ein gattungsgemäßes Verfahren ist zum Beispiel aus EP 1 176 330 A2 oder EP 2 479 450 A1 bereits bekannt. Schiebesattel-Scheibenbremsen, oft auch als Schwimmsattel-Scheibenbremsen oder Gleitsattel-Scheibenbremsen bezeichnet, verfügen über einen längsbeweglich an einem achsfesten Bremsträger gelagerten Bremssattel. Der Bremssattel ist also in Längsrichtung der Fahrzeugachse frei beweglich, wohingegen die Bremsscheibe der Scheibenbremse in Längsrichtung festgelegt ist. Üblicherweise erfolgt die Bremszuspannung einseitig, indem der äußere der beiden Bremsbeläge der Scheibenbremse direkt gegen den Bremssattel abgestützt ist, und die Zuspanneinrichtung nur den anderen, inneren Bremsbelag unmittelbar beaufschlagt. Mit zunehmendem Verschleiß, der überwiegend an den Bremsbelägen stattfindet, aber auch an der Bremsscheibe, wandert der Bremssattel mehr und mehr nach fahrzeuginnen. Damit mit zunehmendem Verschleiß nicht ein immer größerer Zuspannweg einhergeht, verfügen Schiebesattel-Scheibenbremsen über eine zumeist im Bremssattel integrierte Nachstelleinrichtung. Diese stellt über einen Mechanismus sicher, dass das Lüftspiel, also der Abstand zwischen dem Reibbelag der Bremsbeläge und der gegenüberliegenden Reibfläche an der Bremsscheibe, stets in einem bestimmten Rahmen bleibt. Wird durch Verschleiß an den Bremsbelägen oder der Bremsscheibe das Lüftspiel zu groß, erfolgt die Nachstellung.

Für die Schiebebeweglichkeit des Bremssattels ist dieser über mindestens zwei Führungen mit dem achsfesten Bremsträger verbunden, wobei diese Führungen oft als dauergeschmierte Gleitführungen ausgebildet sind. Kommt es, etwa durch Verschmutzung an den Gleitflächen, zu einer Beeinträchtigung der Gleitführung, kann es zu einer Schwergängigkeit des Schiebesattels und, im schlimmsten Fall, zu dessen Festsitzen oder Klemmen kommen. Dies führt zu einer rapiden Verschlechterung der Bremswirkung, und ist daher unbedingt zu vermeiden.

Der Erfindung liegt daher die Aufgabe zugrunde, ein Verfahren zu schaffen, mit dem eine Kontrolle der Schiebebeweglichkeit des Bremssattels einer Schiebesattel-Scheibenbremse erfolgen kann, um so zumindest den Fahrer des Fahrzeuges rechtzeitig zu warnen.

Zur Lösung dieser Aufgabe werden das Verfahren mit den Merkmalen des Anspruchs 1 und das Verfahren mit den Merkmalen des Anspruchs 2 vorgeschlagen.

Zur Durchführung dieser Verfahren bedarf es eines Wegsensors, welcher den bei der Aktivierung bzw. bei der Deaktivierung der Bremszuspannung zurückgelegten Weg bzw. Verschiebeweg des Bremssattels erfasst, sowie einer Steuer- und Kontrolleinheit. Dieser wird der durch den Wegsensor erfasste Verschiebeweg als Wegsignal zugewiesen. Derartige Steuer- und Kontrolleinheiten sind bei vielen modernen Scheibenbremsen ohnehin für die allgemeine Bremssteuerung vorhanden.

Erkennt die Steuer- und Kontrolleinheit den Beginn einer Bremsung, so ist für den Bremssattel nach einer gewissen Zeit ein Verschiebeweg in Richtung Achsmitte zu dem momentanen, gemittelten Weg zu erwarten. Bewegt sich der Bremssattel aus der gemittelten Position nicht mindestens um einen vorgegebenen Weg in einer festgelegten Zeit, so ist dies ein Hinweis auf einen Bremssattel, der auf seiner Schiebeführung klemmt.

Probleme bei der Schiebeführung des Bremssattels können aber auch im Rahmen der Deaktivierung der Zuspannung auftreten, in diesem Fall spricht man von einer gehemmten Sattelführung. Erkennt die Steuer- und Kontrolleinheit das Lösen der Bremse, also die Deaktivierung der Zuspanneinrichtung, so wird nach einer festgelegten Zeit ab dem Lösesignal erwartet, dass sich der Bremssattel durch Rückstellkräfte, z. B. aufgrund im Bremssattel integrierter Rückstellfedern, und durch infolge der jeweiligen Fahrsituation aufgeprägte Bewegungen des Bremssattels wieder ungefähr in die Position des gemittelten Verschiebeweges vor der Aktivierung der Zuspanneinrichtung zurückstellt. Allerdings kann zwischenzeitlich eine Nachstellung erfolgt sein. Im Falle einer Nachstellung unterscheidet sich der eingestellte Mittelwert nach der Bremsung um ein Nachstellinkrement von dem Mittelwert vor der Bremsung. Im Umfang dieses Nachstellinkrements liegt kein ungewolltes, also gehemmtes Verhalten des Bremssattels vor. Kehrt der Bremssattel innerhalb einer festgelegten Zeit nicht wieder zumindest in ein Toleranzband um den alten Mittelwert vor der Bremsaktivierung zurück, ist dies ein Hinweis auf eine gehemmte Führung des Bremssattels.

Nur wenn weder nach dem Betätigen der Bremse, noch nach dem Lösen der Bremse ein unerwartetes Verhalten festgestellt wird (positive Kontrollfeststellung), wird die Führung des Bremssattels als funktional normal angenommen. Das Erzeugen eines Warnsignals unterbleibt.

Sollte hingegen eine negative Kontrollfeststellung erfolgen, da entweder ein Klemmen oder ein Hemmen der Längsführung des Bremssattels diagnostiziert wurde, wird durch die Kontrolleinheit zumindest in dem Fall bei mehrfach aktivierter Zuspannungseinrichtung wiederholt auftretender negativer Kontrollfeststellungen, ein Warnsignal für den Fahrer erzeugt.

Das Verfahren kann während eines regulären Bremsvorgangs durchgeführt werden. Alternativ kann die Ermittlung des Verschiebewegs z. B. in bestimmten Zeit- oder Kontrollintervallen und bei einem festgelegten Bremszylinderdruck erfolgen, der deutlich über dem Ansprechdruck, aber weit entfernt vom Auftreten von Kompressions- und Elastizitätseffekten im Bremssattel und im Belag liegt, z. B. bei einem Bremszylinderdruck von etwa 0,8 bar.

Das erzeugte Warnsignal kann den Fahrer des Fahrzeugs unmittelbar ansprechen, und z. B. ein optisches oder akustisches Warnsignal sein. Wird das Warnsignal über eine Telematik übertragen, kann z. B. eine Leitstelle oder eine Servicestelle vom Defekt der Bremse in Kenntnis gesetzt werden. Sollte das Fehlverhalten öfter an dem Bremssattel vorkommen, wird die Abweichung von dem erwarteten Verhalten als ein Sattel-Beweglichkeitsstatus (klemmt / gehemmt) für den betreffenden Bremssattel über ein Telematiksystem, das an die Steuer- und Kontrolleinheit angeschlossen ist, weitergemeldet.

Ausführungsbeispiele des Verfahrens werden im Folgenden unter Bezugnahme auf die Zeichnungen erläutert. Darin zeigen:

Fig. 1 den über einer Zeitachse aufgetragenen Weg eines Schiebesattels im Falle einer ordnungsgemäßen Funktion bei der Aktivierung sowie der anschließenden Deaktivierung der Zuspanneinrichtung;

Fig. 2 die Verhältnisse im Fall eines während Aktivierung der Zuspanneinrichtung klemmenden Bremssattels;

Fig. 3 die Verhältnisse im Fall eines während der Deaktivierung der Zuspanneinrichtung gehemmten Bremssattels, und

Fig. 4 die Verhältnisse im Fall eines während der Deaktivierung der Zuspanneinrichtung gehemmten Bremssattels, wobei die Scheibenbremse während ihrer Betätigung nachgestellt wurde.

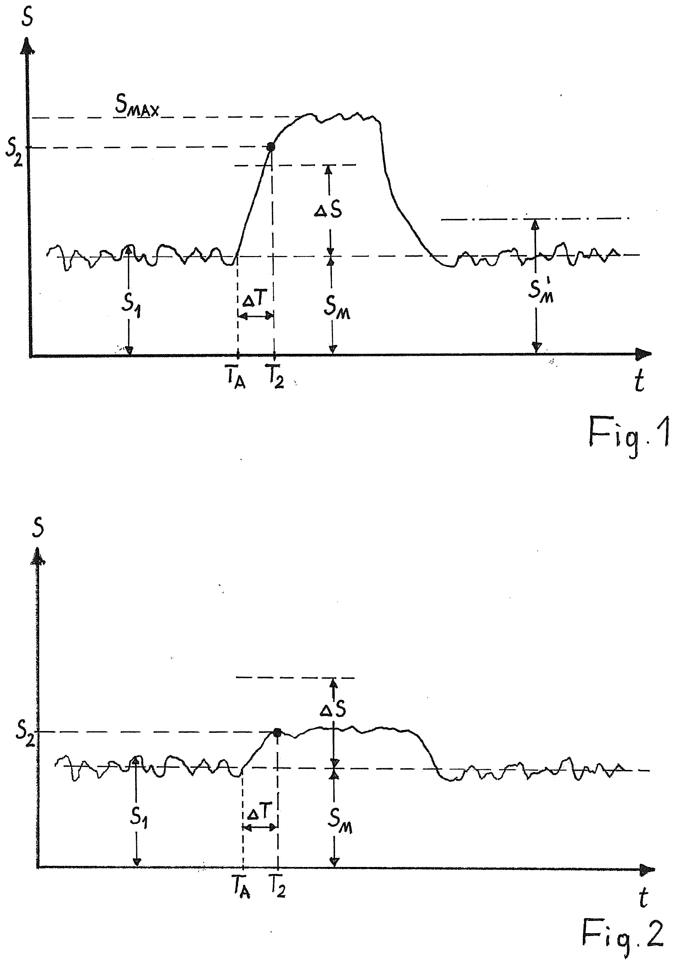

In allen Figuren 1 - 4 gibt die x-Achse den zeitlichen Verlauf, und die y-Achse die Position und damit auch den Weg des Bremssattels der Schiebesattel-Scheibenbremse wieder. Erfasst wird die Position bzw. der Weg mittels eines Wegsensors, welcher die Verschiebung des Bremssattels relativ zu einem achsfesten Bremsträger der Scheibenbremse erfasst. Ein solcher Wegsensor kann z. B. im Bereich eines an dem Bremsträger befestigten Führungsholms angeordnet sein, auf dem der Bremssattel gleitbeweglich angeordnet ist.

Das von dem Wegsensor erfasste Wegsignal wird an eine Steuer- und Kontrolleinheit übermittelt. Diese kann z. B. die für alle Bremsen des Fahrzeugs gemeinsame Bremsensteuereinheit sein.

Der Bremssattel der Schiebesattel-Scheibenbremse übergreift die Bremsscheibe sowie die beidseits der Bremsscheibe angeordneten Bremsbeläge. Der eine der beiden Bremsbeläge ist direkt gegen den Bremssattel abgestützt. Der andere der beiden Bremsbeläge, üblicherweise der fahrzeuginnen angeordnete Bremsbelag, ist durch eine in den Bremssattel integrierte Zuspanneinrichtung gegen die Bremsscheibe zuspannbar.

Der Antrieb der Zuspanneinrichtung kann hydraulisch erfolgen oder pneumatisch mittels eines druckluftbetätigten Bremszylinders sowie eines den Bremsdruck verstärkenden Bremshebels.

Bei der Aktivierung A der Zuspanneinrichtung aufgrund des Bremszylinderdrucks werden die Bremsbeläge, nach Überwinden des Bremslüftspiels, gegen die Bremsscheibe gedrückt. Nach Abschluss des Bremsvorgangs gibt durch Deaktivierung D des Bremszylinderdrucks die Bremse wieder frei, so dass die Bremsbeläge, mit oder ohne Nachstellung des verschleißbedingt vergrößerten Lüftspiels, wieder von der Bremsscheibe gelöst werden, so dass sich im Idealfall wieder das vorbestimmte Lüftspiel zwischen den Reibbelägen der Bremsbeläge und den Reibflächen an der Bremsscheibe einstellt.

Durch den Wegsensor wird sowohl der während der Aktivierung A, als auch der während der Deaktivierung D der Zuspanneinrichtung zurückgelegte Verschiebeweg des Bremssattels erfasst, bzw. die Längsposition des Bremssattels in Bezug auf die achsfeste Schiebeführung an dem Bremsträger. Das so erhaltene Wegsignal wird der zentralen Steuer- und Kontrolleinheit der Scheibenbremse mitgeteilt.

Die Fig. 1 zeigt die Verhältnisse bei ordnungsgemäß arbeitender Scheibenbremse. Bis zu einem Zeitpunkt $T_A$ ist die Bremse im Ruhezustand, und der Wegsensor erfasst entsprechende erste Wegsignale $S_1$. Diese Wegsignale $S_1$ unterliegen zeitlichen Schwankungen, die durch die stets auftretenden, kleinen Bewegungen des Bremssattels bedingt sind, etwa aufgrund der beim Fahren auftretenden Erschütterungen. Aus den vom Wegsensor erfassten ersten Wegsignalen $S_1$ bei unbetätigter Bremse wird in der Steuer- und Kontrolleinheit ein Mittelwert $S_M$ gebildet. Dies kann ein geometrischer Mittelwert sein, ein arithmetischer Mittelwert oder ein anders berechneter Mittelwert der ersten Wegsignale $S_1$.

Die Steuer- und Kontrolleinheit stellt den Beginn der Aktivierung A der Zuspanneinrichtung fest und stellt für diesen Beginn einen ersten Zeitwert $T_A$ fest. Innerhalb kurzer Zeit kommt es dann zu einer Verschiebung des Bremssattels aus der mittleren Position $S_M$ bis zu einer Position $S_{MAX}$, bei der die beiden Bremsbeläge vollständig gegen die Bremsscheibe angedrückt oder angepresst sind.

Ist das Bremsmanöver beendet, erfolgt die Deaktivierung D der Zuspanneinrichtung. Danach werden durch den Wegsensor wieder Wegsignale erfasst, die im Wesentlichen in der Größenordnung des bereits zuvor gebildeten Mittelwerts $S_M$ liegen. Wurde jedoch die Bremse, etwa aufgrund eines relativ großen Verschleißes während des Bremsmanövers, durch die Nachstelleinrichtung nachgestellt, liegen die nach der Deaktivierung D erfassten Wegsignale auf einem höheren Niveau als zuvor, nämlich auf einem in Fig. 1 strichpunktiert eingezeichneten, erhöhten Mittelwert $S_M'$.

Die Steuer- und Kontrolleinheit generiert eine z. B. vorgegebene oder bremsspezifisch einstellbare Zeitdifferenz $\Delta T$, um die sich ein zweiter Zeitwert $T_2$ von dem ersten, bei Aktivierung A der Zuspanneinrichtung festgestellten Zeitwert $T_A$ unterscheidet.

Mit Erreichen des zweiten Zeitwerts $T_2$ wird durch den Wegsensor ein dann vorliegendes, zweites Wegsignal $S_2$ erfasst und der Steuer- und Kontrolleinheit mitgeteilt. Auf Grundlage dieses zweiten Wegsignals S2 erfolgt durch die Steuer- und Kontrolleinheit eine Kontrollfeststellung. Diese Kontrollfeststellung fällt negativ für den Fall des Eintretens der Bedingung $S_2 < S_M + \Delta S$ aus, wobei $\Delta S$ ein Differenzweg ist, der kleiner als der bei vorangegangenen Aktivierungen A zurückgelegte Verschiebeweg ist.

Im Fall der Fig. 1 hingegen fällt diese Kontrollfeststellung positiv aus, da der zum Zeitpunkt $T_2$ erreichte Verschiebeweg $S_2$ größer ist als die Summe aus $S_M$ und $\Delta S$.

Anders sind die Verhältnisse bei der Situation nach Fig. 2. Hier ist $S_2$ kleiner als die Summe aus $S_M$ und $\Delta S$, und innerhalb der Steuer- und Kontrolleinheit wird eine negative Kontrollfeststellung getroffen. Im Fall dieser negativen Kontrollfeststellung oder alternativ im Fall bei mehrfach aktivierter Zuspanneinrichtung wiederholt auftretender negativer Kontrollfeststellungen erzeugt die Steuer- und Kontrolleinheit ein Warnsignal. Das Warnsignal wird dem Fahrer mitgeteilt, z. B. als optisches oder akustisches Signal. Ferner kann das Warnsignal über ein Fahrzeug-Telematiksystem an einen externen Empfänger übermittelt werden, z. B. eine Servicestelle.

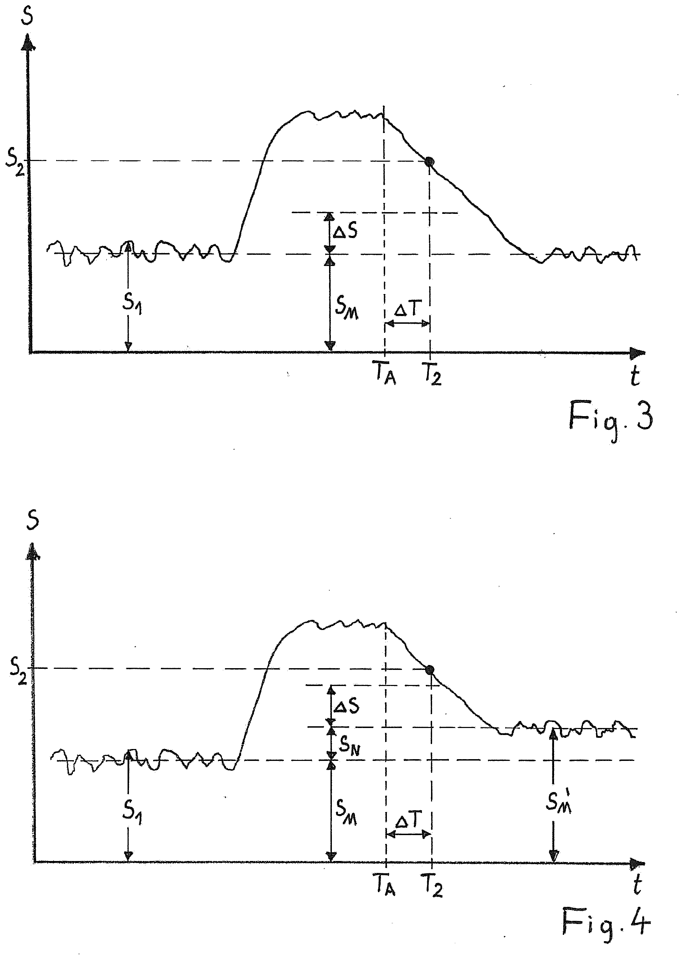

In den Figuren 3 und 4 ist das Verfahren zur Kontrolle der Schiebebeweglichkeit im Zusammenhang mit der Deaktivierung D der Zuspanneinrichtung erläutert, wobei in beiden Fällen der Bremssattel ein gehemmtes Bewegungsverhalten zeigt, und daher eine negative Kontrollfeststellung getroffen wird. Unterschiedlich bei Fig. 3 und Fig. 4 ist der zusätzliche Aspekt der Nachstellung der Bremse zum Ausgleich des zwischenzeitlich eingetretenen Verschleißes. Bei Fig. 4 wurde die Bremse nachgestellt, bei Fig. 3 nicht.

Den Situationen Fig. 3 und Fig. 4 gemeinsam ist, dass bei der Deaktivierung D der Zuspanneinrichtung der Bremssattel deutlich zu langsam in die Ruhestellung zurückkehrt. Der Bremssattel ist daher gehemmt.

Auch bei dem Verfahren der Überprüfung einer Hemmung des Bremssattels erfolgt bei noch nicht aktivierter Zuspanneinrichtung das Erfassen der ersten Wegsignale $S_1$ durch den Wegsensor, sowie, innerhalb der Steuer- und Kontrolleinheit, das Bilden des Mittelwerts $S_M$ aus den ersten Wegsignalen $S_1$. Mit dem Feststellen der Deaktivierung D durch die Steuer- und Kontrolleinheit wird der erste Zeitwert $T_A$ gesetzt. In der Steuer- und Kontrolleinheit wird ein zweiter Zeitwert $T_2 = T_A + \Delta T$ bestimmt, wobei $\Delta T$ eine in der Steuer- und Kontrolleinheit vorgegebene Zeitdifferenz ist, die fest eingestellt ist, oder bremsspezifisch einstellbar ist.

Das bei Erreichen des zweiten Zeitwerts $T_2$ durch den Wegsensor gelieferte zweite Wegsignal $S_2$ wird der Steuer- und Kontrolleinheit übermittelt, wobei in der Steuer- und Kontrolleinheit eine Kontrollfeststellung getroffen wird. Die Kontrollfeststellung ist eine negative Kontrollfeststellung für den Fall des Eintretens mindestens einer der beiden folgenden Bedingungen, wobei der erste Fall in Fig. 3, und der zweite Fall in Fig. 4 wiedergegeben ist:

1. $S_2 > S_M + \Delta S$, wobei $\Delta S$ ein Differenzweg ist, der kleiner als der bei vorangegangenen Deaktivierungen (D) zurückgelegte Verschiebeweg ist,

2. $S_2 > S_M + S_N + \Delta S$, wobei $S_N$ der Nachstellweg ist und $\Delta S$ ein Differenzweg ist, der kleiner als der bei vorangegangenen Deaktivierungen (D) zurückgelegte Verschiebeweg ist,

Im Fall einer negativen Kontrollfeststellung, sei dies im Fall Ziffer 1. oder im Fall Ziffer 2., oder im Fall bei mehrfach aktivierter und deaktivierter Zuspanneinrichtung wiederholt auftretender negativer Kontrollfeststellungen, erzeugt die Steuer- und Kontrolleinheit das Warnsignal.

**Patentansprüche**

1. Verfahren zur Kontrolle der Schiebebeweglichkeit eines eine Bremsscheibe sowie Bremsbeläge beidseits der Bremsscheibe übergreifenden Bremssattels einer Schiebesattel-Scheibenbremse, deren einer Bremsbelag direkt gegen den Bremssattel abgestützt ist und deren anderer Bremsbelag durch eine Zuspanneinrichtung gegen die Bremsscheibe zuspannbar ist, bei dem

   - durch Aktivierung der Zuspanneinrichtung die Bremsbeläge, nach Überwinden des Bremslüftspiels, gegen die Bremsscheibe gedrückt werden,
   - der während der Aktivierung zurückgelegte Verschiebeweg des Bremssattels durch einen Wegsensor erfasst wird,
   - der erfasste Verschiebeweg als Wegsignal einer Steuer- und Kontrolleinheit zugewiesen wird,

   **gekennzeichnet durch** die Schritte

   - bei nicht aktivierter Zuspanneinrichtung Erfassen von ersten Wegsignalen ($S_1$) durch den Wegsensor, und Bilden eines Mittelwerts ($S_M$) aus den ersten Wegsignalen ($S_1$),
   - mit Aktivierung der Zuspanneinrichtung Setzen eines ersten Zeitwerts ($T_A$),
   - Bestimmen eines zweiten Zeitwerts $T_2 = T_A + \Delta T$, wobei $\Delta T$ eine vorgegebene Zeitdifferenz ist,

- Erfassen des bei Erreichen des zweiten Zeitwerts ($T_2$) durch den Wegsensor gelieferten zweiten Wegsignals ($S_2$),
- Treffen einer negativen Kontrollfeststellung für den Fall des Eintretens der Bedingung

$$S_2 < S_M + \Delta S$$

wobei $\Delta S$ ein Differenzweg ist, der kleiner als der bei vorangegangenen Aktivierungen zurückgelegte Verschiebeweg ist,
- im Fall negativer Kontrollfeststellung oder im Fall bei mehrfach aktivierter Zuspanneinrichtung wiederholt auftretender negativer Kontrollfeststellungen Erzeugen eines Warnsignals.

2. Verfahren zur Kontrolle der Schiebebeweglichkeit eines eine Bremsscheibe sowie Bremsbeläge beidseits der Bremsscheibe übergreifenden Bremssattels einer Schiebesattel-Scheibenbremse, deren einer Bremsbelag direkt gegen den Bremssattel abgestützt ist und deren anderer Bremsbelag durch eine Zuspanneinrichtung gegen die Bremsscheibe zuspannbar ist, bei dem

- durch Aktivierung der Zuspanneinrichtung die Bremsbeläge, nach Überwinden des Bremslüftspiels, gegen die Bremsscheibe gedrückt werden,
- durch anschließende Deaktivierung der Zuspanneinrichtung die Bremsbeläge, mit oder ohne eine Nachstellung des verschleißbedingt vergrößerten Lüftspiels, wieder freigegeben werden,
- der während der Deaktivierung zurückgelegte Verschiebeweg des Bremssattels durch einen Wegsensor erfasst wird,
- der erfasste Verschiebeweg als Wegsignal einer Steuer- und Kontrolleinheit zugewiesen wird,

**gekennzeichnet durch** die Schritte

- bei nicht aktivierter Zuspanneinrichtung Erfassen von ersten Wegsignalen ($S_1$) durch den Wegsensor, und Bilden eines Mittelwerts ($S_M$) aus den ersten Wegsignalen ($S_1$),
- Aktivierung der Zuspanneinrichtung,
- mit Deaktivierung der Zuspanneinrichtung Setzen eines ersten Zeitwerts ($T_A$),
- Bestimmen eines zweiten Zeitwerts $T_2 = T_A + \Delta T$, wobei $\Delta T$ eine vorgegebene Zeitdifferenz ist,
- Erfassen des bei Erreichen des zweiten Zeitwerts ($T_2$) durch den Wegsensor gelieferten zweiten Wegsignals ($S_2$),

- Treffen einer negativen Kontrollfeststellung für den Fall des Eintretens einer der beiden Bedingungen

- $S_2 > S_M + \Delta S$, wobei $\Delta S$ ein Differenzweg ist, der kleiner als der bei vorangegangenen Deaktivierungen zurückgelegte Verschiebeweg ist,
- $S_2 > S_M + S_N + \Delta S$, wobei $S_N$ der Nachstellweg ist und $\Delta S$ ein Differenzweg ist, der kleiner als der bei vorangegangenen Deaktivierungen zurückgelegte Verschiebeweg ist,

- im Fall negativer Kontrollfeststellung oder im Fall bei mehrfach aktivierter und deaktivierter Zuspanneinrichtung wiederholt auftretender negativer Kontrollfeststellungen Erzeugen eines Warnsignals.

## Claims

1. Method for monitoring the sliding mobility of a brake caliper of a sliding caliper disc brake, which brake caliper comprises a brake disc as well as brake linings on both sides of the brake disc, one brake lining thereof being supported directly against the brake caliper and the other brake lining thereof being capable of being clamped against the brake disc by a clamping device, wherein

- by activation of the clamping device the brake linings, after overcoming the brake clearance, are pressed against the brake disc,
- the displacement path travelled by the brake caliper during the activation is detected by a path sensor,
- the detected displacement path is assigned to a control and monitoring unit as a path signal,

**characterised by** the steps of

- without activation of the clamping device, detection of first path signals ($S_1$) by the path sensor, and formation of a mean value ($S_M$) from the first path signals ($S_1$),
- with activation of the clamping device, setting of a first time value ($T_A$),
- determination of a second time value $T_2 = T_A + \Delta T$, wherein $\Delta T$ is a predetermined time difference,
- detection of the second path signal ($S_2$) supplied by the path sensor when the second time value ($T_2$) is reached,
- reaching of a negative conclusion about monitoring for the case where the condition

$$S_2 < S_M + \Delta S$$

occurs, wherein $\Delta S$ is a differential path, which is less than the displacement path travelled during preceding activations,

- generation of a warning signal in the event of negative conclusions about monitoring or in the event of repeatedly occurring negative conclusions about monitoring with multiple activations of the clamping device.

2. Method for monitoring the sliding mobility of a brake caliper of a sliding caliper disc brake, which brake caliper comprises a brake disc as well as brake linings on both sides of the brake disc, one brake lining thereof being supported directly against the brake caliper and the other brake lining thereof being capable of being clamped against the brake disc by a clamping device, wherein

- by activation of the clamping device the brake linings, after overcoming the brake clearance, are pressed against the brake disc,
- by subsequent deactivation of the clamping device, with or without a readjustment of the clearance enlarged due to wear, the brake linings are released again,
- the displacement path travelled by the brake caliper during the deactivation is detected by a path sensor,
- the detected displacement path is assigned to a control and monitoring unit as a path signal,

**characterised by** the steps of

- without activation of the clamping device, detection of first path signals ($S_1$) by the path sensor, and formation of a mean value ($S_M$) from the first path signals ($S_1$),
- activation of the clamping device,
- with deactivation of the clamping device, setting of a first time value ($T_A$),
- determination of a second time value $T_2 = T_A + \Delta T$, wherein $\Delta T$ is a predetermined time difference,
- detection of the second path signal ($S_2$) supplied by the path sensor when the second time value ($T_2$) is reached,
- reaching of a negative conclusion about monitoring for the case where one of the two following conditions occurs

- $S_2 > S_M + \Delta S$, wherein $\Delta S$ is a differential path, which is less than the displacement path travelled during preceding deactivations,

- $S_2 > S_M + S_N + \Delta S$, wherein $S_N$ is the readjustment path and $\Delta S$ is a differential path, which is less than the displacement path travelled during preceding deactivations,

- generation of a warning signal in the event of negative conclusions about monitoring or in the event of repeatedly occurring negative conclusions about monitoring with multiple activations and deactivations of the clamping device.

**Revendications**

1. Procédé de contrôle du mouvement coulissant d'un étrier de frein qui chevauche un disque de frein et des garnitures de freins situées des deux côtés du disque de frein d'un frein à disque à étrier coulissant, dont une garniture de frein appuie directement contre l'étrier de frein et dont l'autre garniture de frein peut être serrée contre le disque de frein au moyen d'un dispositif de serrage, dans lequel

- les garnitures de freins sont comprimées contre le disque de frein après que le jeu d'aération de frein a été surmonté par activation du dispositif de serrage,
- la course de déplacement de l'étrier de frein parcourue pendant l'activation est détectée par un capteur de course,
- la course de déplacement détectée est envoyée à une unité de commande et de contrôle en tant que signal de course,

**caractérisé par** les étapes consistant à

- lorsque le dispositif de serrage n'est pas activé, détecter des premiers signaux de course ($S_1$) au moyen du capteur de course et calculer une valeur moyenne ($S_M$) à partir des premiers signaux de course ($S_1$),
- régler une première valeur temporelle ($T_A$) en association avec l'activation du dispositif de serrage,
- déterminer une deuxième valeur temporelle $T_2 = T_A + \Delta T$, où $\Delta T$ est une différence de temps prédéterminée,
- détecter le deuxième signal de course ($S_2$) délivré par le capteur de course lorsque la deuxième valeur temporelle ($T_2$) est atteinte,
- déterminer un réglage de contrôle négatif dans le cas où la condition suivante se produit :

$$S_2 < S_M + \Delta S$$

où $\Delta S$ est une course différentielle qui est inférieure à la course de déplacement parcourue lors d'activations précédentes,

- dans le cas d'un réglage de contrôle négatif ou dans le cas où des réglages de contrôle négatifs se produisent de manière répétée lorsque le dispositif de serrage est activé plusieurs fois, générer un signal d'alarme.

**2.** Procédé de contrôle du mouvement coulissant d'un étrier de frein qui chevauche un disque de frein et des garnitures de freins situées des deux côtés du disque de frein d'un frein à disque à étrier coulissant, dont une garniture de frein appuie directement contre l'étrier de frein et dont l'autre garniture de frein peut être serrée contre le disque de frein au moyen d'un dispositif de serrage, dans lequel

- les garnitures de freins sont comprimées contre le disque de frein après que le jeu d'aération de frein a été surmonté par activation du dispositif de serrage,
- les garnitures de freins sont de nouveau libérées avec ou sans réajustement du jeu d'aération augmenté en raison de l'usure par une désactivation effectuée ensuite du dispositif de serrage,
- la course de déplacement de l'étrier de frein parcourue pendant la désactivation est détectée par un capteur de course,
- la course de déplacement détectée est envoyée à une unité de commande et de contrôle en tant que signal de course,

**caractérisé par** les étapes consistant à

- lorsque le dispositif de serrage n'est pas activé, détecter des premiers signaux de course ($S_1$) au moyen du capteur de course et calculer une valeur moyenne ($S_M$) à partir des premiers signaux de course ($S_1$),
- activer le dispositif de serrage,
- régler une première valeur temporelle ($T_A$) en association avec la désactivation du dispositif de serrage,
- déterminer une deuxième valeur temporelle $T_2$ = $T_A+\Delta T$, où $\Delta T$ est une différence de temps prédéterminée,
- détecter le deuxième signal de course ($S_2$) délivré par le capteur de course lorsque la deuxième valeur temporelle ($T_2$) est atteinte,
- déterminer un réglage de contrôle négatif dans le cas où les deux conditions suivantes se produisent :
- $S_2 > S_M + \Delta S$, où $\Delta S$ est une course différentielle qui est inférieure à la course de déplacement parcourue lors de désactivations précédentes,

- $S_2 > S_M + S_N + \Delta S$, où $S_N$ est la course de réajustement et $\Delta S$ est une course différentielle qui est inférieure à la course de déplacement parcourue lors de désactivations précédentes,
- dans le cas d'un réglage de contrôle négatif ou dans le cas où des réglages de contrôle négatifs se produisent de manière répétée lorsque le dispositif de serrage est activé et désactivé plusieurs fois, générer un signal d'alarme.

Fig.1

Fig.2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1176330 A2
- EP 2479450 A1